# FASCICULE DE BREVET EUROPEEN

(11) **EP 1 931 959 B1**
(45) Date de publication et mention de la délivrance du brevet: **25.02.2009**
(21) Numéro de dépôt: 06808299.9
(22) Date de dépôt: 11.09.2006
(51) Int. Cl.: G01M 3/00, F16K 31/363

(54) **VANNE DE COMMANDE D'ECOULEMENT DE FLUIDE**
FLUIDSTRÖMUNGS-STEUERVENTIL
FLUID FLOW CONTROL VALVE

(30) Priorité: 13.09.2005 FR 0552756
(43) Date de publication de la demande: 18.06.2008
(73) Titulaire: Prodecfu, 27000 Evreux (FR)
(72) Inventeur: CROIBIER, Denis, F-28270 Brezolles (FR)
(74) Mandataire: CAPRI
(86) Numéro de dépôt international: PCT/FR2006/050861
(87) Numéro de publication internationale: WO 2007/031672

(56) Documents cités:
- EP-A1- 0 964 235
- US-A- 5 503 362
- US-B1- 6 382 586

## Description

La présente invention concerne une vanne de commande d'écoulement de fluide destinée à être montée sur une ligne d'alimentation de fluide. Le fluide peut être un liquide ou un gaz. La vanne est commandée de manière à autoriser ou à stopper l'écoulement de fluide au travers de la vanne. Une telle vanne de commande d'écoulement de fluide peut être utilisée dans de nombreux domaines d'application où un fluide quelconque doit être véhiculé d'un endroit à un autre au travers d'une ligne. Par ligne, il faut entendre tout moyen d'alimentation ou d'acheminement tel que des conduites, des tuyaux, etc.

Une telle vanne de commande d'écoulement de fluide comprend généralement une entrée destinée à être connectée à une conduite d'alimentation, une sortie destinée à être connectée à une conduite d'évacuation, un clapet mobile de commande reposant au repos sur un siège de clapet, de manière à isoler l'entrée de la sortie et des moyens d'actionnement pour déplacer le clapet mobile et ainsi établir une communication de fluide entre l'entrée et la sortie. Il s'agit là de la conception tout à fait classique pour une vanne de commande d'écoulement de fluide. Parmi ces vannes, on connaît déjà depuis longtemps les électrovannes du type comprenant une chambre communiquant avec l'entrée à travers un trou de section déterminée, cette chambre étant disposée par rapport au clapet du côté opposé au siège, de manière à solliciter le clapet sur son siège. L'électrovanne comprend d'autre part un bipasse reliant la chambre à la sortie, le bipasse étant commandable entre un état ouvert de passage de fluide et un état fermé, le bipasse présente alors une section de passage supérieure à celle du trou de manière à faire chuter la pression dans la chambre, en ouvrant le bipasse. La chute de pression dans la chambre se produit du fait que le fluide à l'intérieur de la chambre s'écoule plus rapidement à travers le bipasse que le fluide ne pénètre à l'intérieur de la chambre à travers le trou calibré. Ainsi, le clapet mobile qui est également soumis à la pression de fluide de l'entrée se soulève en se décollant de son siège et libère ainsi un passage de communication pour le fluide qui peut alors gagner la sortie. Il s'agit là d'un principe de fonctionnement classique pour une électrovanne. Une telle vanne de commande remplit ainsi une fonction unique consistant en un fonctionnement binaire d'autorisation ou de coupure de l'écoulement de fluide.

La présente invention a pour but de conférer à une telle vanne de commande d'autres fonctions utiles pour un fonctionnement fiable et sécurisé de la ligne sur laquelle la vanne de commande est montée.

Selon une forme de réalisation de l'invention, la vanne de commande intègre en outre des moyens de détection de fuites de fluide apte à détecter une fuite de fluide en aval du clapet mobile. Les moyens de détection de fuites ne sont pas simplement ajoutés à une vanne de commande classique, mais en font partie intégrante, de manière à ne constituer qu'une entité unique. En d'autres termes, les moyens de détection de fuites sont indissociables de la vanne de commande. Ainsi, une telle vanne de commande selon l'invention remplit une double fonction, à savoir la fonction classique de coupure de l'écoulement de fluide et la fonction supplémentaire de détection de fuite. Cette vanne à détection de fuite intégrée peut servir l'acheminement et à la détection de fluide dans des conduites, tuyaux, canalisations, etc... Elle peut également servir à tester l'étanchéité de récipients, cuves, citernes, réservoirs, etc...

On connaît déjà du document EP 964 235 A1 un détecteur de fuite de fluide qui comprend un obturateur élastique apte à se déplacer lorsque soumis à un différentiel de pression. En fin de course, cet obturateur élastique établit un contact qui active un bipasse permettant de rééquilibrer la pression entre l'entrée et la sortie du détecteur. Cependant, le détecteur de ce document européen ne peut en aucun cas couper l'écoulement de fluide en cas de détection d'une fuite. Pour cela, il faut monter une vanne de secours sur la ligne d'alimentation équipée du détecteur. Le détecteur de fuites n'est par conséquent pas du tout intégré à la vanne de secours.

Selon un mode de réalisation avantageux, les moyens de détection sont couplés aux moyens d'actionnement du clapet mobile, de sorte que les moyens d'actionnement font partie intégrante des moyens de détection lorsque la vanne est en mode de détection de fuite. Ainsi, les moyens d'actionnement du clapet mobile sont utilisés d'une part pour commander le clapet mobile et d'autre part pour participer à la détection d'éventuelles fuites de fluide. Cette double utilisation des moyens d'actionnement du clapet constitue un principe avantageux de l'invention.

Dans le cas d'une vanne de commande utilisant des moyens d'actionnement comprenant une chambre et un bipasse tel que susmentionné, il est avantageux que les moyens de détection de fuite comprennent un organe de détection déplaçable, mobile déformable ou sensible en réponse à un différentiel de pression entre l'entrée et la sortie, ledit organe étant soumis à la pression régnant dans la chambre et à la pression régnant au niveau de la sortie. De préférence, l'organe comprend une couronne d'ancrage solidaire du clapet mobile, une membrane élastiquement déformable et un embout d'extrémité opposé à la couronne, ledit embout étant déplaçable axialement par rapport à la couronne par déformation de la membrane, l'embout étant pourvu de moyens de détection aptes à relever une position prédéterminée de l'embout et à envoyer un signal de déclenchement au bipasse pour l'amener dans son état ouvert. Selon une caractéristique particulièrement avantageuse de l'invention, le bipasse est monté sur l'embout. De préférence, l'embout définit un orifice de passage faisant communiquer la chambre avec la sortie, le bipasse comprenant un noyau ferromagnétique déplaçable en coulissement dans un solénoïde, le noyau étant apte à obturer l'orifice de passage de l'embout lorsque le solénoïde n'est pas alimenté, le noyau étant pourvu de moyens de détection aptes à relever une position prédéterminée du noyau et à envoyer un signal d'alimentation au solénoïde, pour déplacer le noyau en éloignement de l'embout et ainsi dégager l'orifice de passage.

Selon un autre aspect de l'invention, le clapet mobile forme un passage traversant qui fait communiquer la sortie avec l'intérieur de l'organe déplaçable disposé dans la chambre.

Selon une forme de réalisation pratique, le clapet mobile comprend une rondelle élastiquement déformable maintenue fixement sur sa périphérie externe, une face de la rondelle étant tournée vers l'entrée et la sortie et reposant sur le siège, alors que l'autre face est tournée vers la chambre, le trou traversant la rondelle d'une face à l'autre. Avantageusement, le clapet mobile comprend en outre une douille rigide formant un passage traversant qui fait communiquer la sortie avec l'intérieur de l'organe déplaçable, cet organe déplaçable étant solidaire de la douille, la douille étant sollicitée par un ressort de manière à pousser la rondelle sur son siège.

Selon un autre aspect intéressant de l'invention, la vanne de commande comprend en outre des moyens de contrôle de débit au niveau de la sortie, les moyens de contrôle de débit envoyant un signal de coupure des moyens de détection de fuite, lorsque le débit atteint une valeur prédéterminée.

En résumé, on peut dire qu'un différentiel de pression entre l'entrée et la sortie est indicateur d'une fuite au niveau de la sortie, ou plus généralement en aval du clapet. Ce différentiel de pression agit sur l'organe de détection des moyens de détection de fuite, étant donné que cet organe est soumis d'un côté à la pression d'entrée et de l'autre côté à la pression de sortie. En fonction de la sensibilité de cet organe, on peut détecter des différentiels de pression dans des gammes de pression très variées, correspondant à des fuites très faibles ou à des fuites plus importantes. On peut même utiliser ces moyens de détection de fuite comme débitmètre si l'on considère des fuites très importantes. En effet, une fuite très importante peut correspondre à un régime normal d'écoulement de la vanne. Dans le cas d'un organe déplaçable, lorsque celui-ci atteint une position prédéterminée, un signal est donné au moyen d'actionnement pour rééquilibrer la pression de part et d'autre du clapet. Ceci s'effectue en pratique en ouvrant le bipasse. Dès que la pression est rééquilibrée de part et d'autre du clapet, le bipasse se referme. L'équilibrage de pression permet en même temps à l'organe de revenir à sa position initiale de repos, dans laquelle il n'est soumis à aucun différentiel de pression. Si la fuite persiste, l'organe déplaçable va à nouveau être déformé du fait qu'un nouveau différentiel de pression va se développer. A nouveau, dès lors que l'organe déplaçable atteint une position prédéterminée, le bipasse s'ouvre afin de rééquilibrer les pressions et l'organe revient à sa position de repos. Ainsi, en observant que le bipasse est actionné successivement et/ou périodiquement, on peut en déduire qu'il y a une fuite en aval du clapet. Et en fonction de la fréquence de fonctionnement du bipasse, ou plus généralement des moyens d'actionnement du clapet, on peut déterminer l'importance de la fuite, par exemple en terme de débit. Au bout d'un certain nombre d'actionnements du bipasse, on peut par exemple décider que le bipasse ne répondra plus lorsque l'organe déplaçable aura atteint sa position prédéterminée, de sorte que la vanne va alors être bloquée en position fermée. On peut ainsi non seulement détecter une fuite, mais également stopper l'écoulement au travers de la vanne en cas de détection d'une fuite persistante. A la place de l'organe déplaçable, on peut utiliser une cellule de détection de pression différentielle.

Bien entendu, il faut que le différentiel de pression auquel les moyens de détection de fuite sont sensibles soit inférieur au différentiel de pression permettant d'ouvrir le clapet mobile.

Comparativement au détecteur de fuite de fluide du document EP 964 235 A1, les moyens de détection de la présente invention sont intégrés ou incorporés à une vanne de commande d'écoulement de fluide classique et en utilisent même les moyens d'actionnement. Dans ce document européen précité, les moyens de détection sont destinés à être montés sur une ligne d'alimentation qui peut en outre être équipée d'une vanne de commande, de sorte que les moyens de détection sont totalement dissociés de la vanne de commande. Dans la présente invention, la vanne de commande et les moyens de détection sont intégrés fusionnés en une seule unité, et on peut se servir des moyens de détection pour couper l'écoulement de fluide en cas de détection d'une fuite persistante.

L'invention sera maintenant plus amplement décrite en référence aux dessins joints, donnant à titre d'exemple non limitatif, deux modes de réalisation de l'invention.

Sur les figures :
La figure 1 est une vue en section transversale verticale à travers une vanne de commande selon une première forme de réalisation de l'invention à l'état de repos,
Les figures 2A, 2B, 2C, 2D, 2E et 2F sont des vues de la vanne de la figure 1 au cours de six phases de cycle opératoire, et
La figure 3 est une autre vue en section transversale verticale à travers une vanne de commande selon un second mode de réalisation de l'invention.

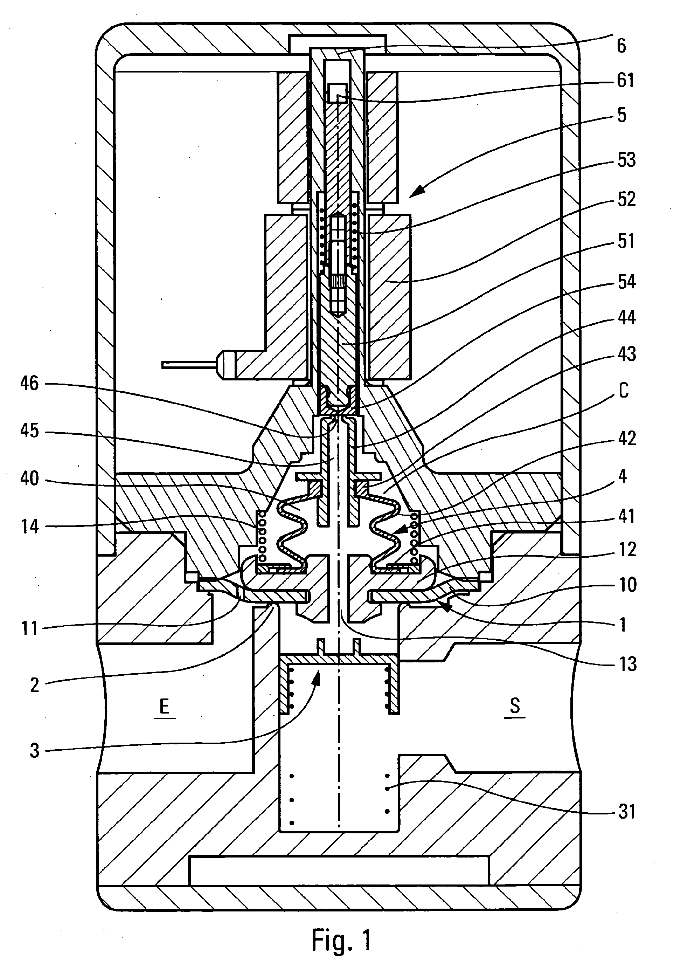

On se référera tout d'abord à la figure 1 pour expliquer en détails la structure de la vanne de commande d'écoulement de fluide selon le premier mode de réalisation de l'invention. La vanne est une vanne de type électrovanne, c'est-à-dire alimentée électriquement pour commander l'actionnement de la vanne. Il s'agit même d'un type particulier d'électrovanne dont le détail va maintenant être décrit.

La vanne comprend de manière classique une entrée E et une sortie S séparées par un clapet mobile 1 qui repose sur un siège 2. Au repos, comme représenté sur la figure 1, le clapet 1 repose de manière étanche sur le siège 2, et coupe ainsi toute communication de fluide entre l'entrée et la sortie. La vanne est alors à l'état fermé. L'entrée E est destinée à être raccordée à une conduite d'alimentation (non représentée), qui peut être de toutes natures. De même, la sortie est destinée à être connectée à une conduite d'évacuation ou d'écoulement (non représentée) qui peut également être de toutes natures. Le clapet mobile 1 est ici réalisé en deux pièces, à savoir une rondelle élastiquement déformable 10 et une douille rigide 12. La rondelle élastiquement déformable 10 est maintenue fixement au niveau de sa périphérie externe et définit en son centre une ouverture délimitée par un bord. La douille 12 est en prise avec le bord de l'ouverture de la rondelle 10, et présente également un passage traversant 13. La douille 12 repose en grande partie sur la rondelle 10 : cependant, la rondelle 10 est susceptible d'être déformée élastiquement dans sa zone située entre sa périphérie externe et l'endroit où elle vient en contact avec la douille 12. Le clapet mobile 1 est sollicité par un ressort de rappel 14 dans la position de repos, dans laquelle la rondelle 10 est appuyée de manière étanche sur le siège 2. Selon l'invention, la rondelle 10 est percée d'un trou 11 de section réduite prédéterminée.

Ainsi, lorsque le clapet est au repos, la face inférieure de la rondelle 10 est tournée vers l'entrée E et vers la sortie S : la face inférieure de la rondelle étant en contact de l'entrée E au niveau de sa périphérie externe, alors que la face interne de la rondelle est en contact de la sortie S au niveau de sa partie centrale où est formé le passage traversant 13. L'entrée est séparée de la sortie par le contact étanche effectué entre la face inférieure de la rondelle 10 et le siège 2.

Selon l'invention, la sortie S peut être pourvue de moyens de détection de débit 3 qui peuvent par exemple se présenter sous la forme d'un flotteur sollicité vers le clapet 1 par un ressort de rappel 31. Le débit peut être mesuré en fonction de la position du flotteur 3. La valeur de débit mesurée peut être utilisée pour donner une indication du débit, ou pour déclencher un fonctionnement particulier de la vanne, comme on le verra ci après.

Au dessus du clapet 1, la vanne définit une chambre C qui communique avec l'entrée E au travers du trou 11. On peut dire que la face supérieure de la rondelle 10 est tournée vers la chambre C, de même que la douille 12. Ainsi, la chambre C est soumise au repos à la même pression que l'entrée E, du fait que le fluide communique à travers le trou 11.

Selon l'invention, la chambre C contient un organe de détection 4 qui se présente ici sous la forme générale d'un soufflet déformable apte à s'écraser ou à se ratatiner sur lui même. L'organe déformable 4 comprend un talon d'ancrage 41 solidaire de la douille 12, une membrane élastiquement déformable 41, un col de fixation supérieur 43 et un embout d'extrémité 44 qui est en prise dans le col 43. L'embout 44 peut aussi être réalisé de manière monobloc avec le col 43, la membrane 42 et la couronne 41. L'embout 44 définit intérieurement un conduit 45 qui se termine à son extrémité supérieure par un orifice de passage 46. L'organe déformable 4 est disposé à l'intérieur de la chambre C et en occupe une partie significative. L'intérieur de l'organe déformable 4 définit un espace 40 qui communique avec la sortie S à travers le passage traversant 13 défini par le clapet mobile 1. A son extrémité supérieure, l'espace 40 communique avec la chambre C à travers le conduit 45 et l'orifice de passage 46. Toutefois, en position de repos, comme représenté sur la figure 1, cet orifice de passage 46 est obturé par un bouchon 54. Ainsi, en position de repos, l'espace 40 ne communique pas avec la chambre C. Etant donné que la chambre C est à la même pression que l'entrée E et que l'espace 40 est à la même pression que la sortie S, l'organe déformable 4 constitue une interface qui est sensible au différentiel de pression existant entre l'entrée E et la sortie S. Au repos, la pression au niveau de l'entrée E est normalement égale à la pression au niveau de la sortie S de sorte que le différentiel de pression est nul. Par conséquent, l'organe déformable 4 n'est soumis à aucun différentiel de pression. En revanche, si un différentiel de pression existe entre l'entrée et la sortie, l'organe déformable 4 est soumis à ce différentiel de pression, et va ainsi se déformer sous l'effet de ce différentiel de pression. Bien entendu, la capacité de déformation de l'organe déformable 4 est dépendante de sa raideur : ainsi, plus la raideur de l'organe 4 est importante, et moins il sera sensible à de faibles différentiels de pression et vice versa. De cette façon, lorsque la pression à l'intérieur de la chambre C est supérieure à la pression à l'intérieur de l'espace 40, l'organe déformable 4 va se déformer en se ratatinant, ce qui conduit à déplacer l'embout d'extrémité 45 vers le bas en direction du passage traversant 13. En se ratatinant, le volume de l'espace 40 diminue et le volume de la chambre C augmente. L'orifice de passage 46 est obturé tant que le bouchon 54 suit le déplacement de l'embout d'extrémité 45. Cependant, si le bouchon 54 se décolle de l'orifice 46, alors une communication de fluide est établir entre l'espace 40 et la chambre C, et conduit à un rééquilibrage des pressions entre l'entrée E et la sortie S. A cet égard, il faut noter que la section du trou 11 est largement inférieure à la section de passage de l'orifice de passage 46 et à la section du passage traversant 13.

A la place de l'organe déformable en forme de soufflet, on peut également utiliser un piston sollicité vers une position de repos par un ressort ou des moyens de rappel quelconques. Ainsi, l'organe 4 peut être déplaçable ou déformable selon les cas d'application.

On peut également utiliser une cellule de détection de pression différentielle.

La vanne comprend également des moyens de commande 5 qui se présentent ici sous la forme d'un bipasse comprenant un noyau 51 engagé à l'intérieur d'une bobine ou solénoïde 52. Le noyau 51 est réalisé en un matériau ferromagnétique sensible au champ induit dans le solénoïde 52 lorsque celui-ci est alimenté. Le bouchon 54 est monté à l'extrémité inférieure du noyau 51, de sorte qu'il peut se déplacer lorsque l'on alimente le solénoïde 52. Un ressort de rappel 53 sollicite le noyau 51 vers le bas, et ainsi le bouchon 54 en appui sur l'orifice de passage 46 formé par l'embout 45. Par conséquent, en position de repos, le bouchon 54 est sollicité de manière étanche sur l'orifice de passage 46, et ceci même lorsque l'organe déformable 40 se ratatine sur lui même.

La chambre C, ensemble avec les moyens de commande, forment des moyens d'actionnement du clapet mobile 1. En effet, l'ouverture de l'orifice de passage 46, en activant le solénoïde 52 a pour effet de faire chuter la pression dans la chambre C, de sorte que la pression de l'entrée E peut décoller le clapet mobile 1.

La vanne selon l'invention comprend également des moyens de détection 6 qui permettent de détecter la position du noyau 51 à l'intérieur du solénoïde 52. Ces moyens de détection sont par exemple des moyens de détection de distance qui déterminent la distance à un aimant 61 monté à l'extrémité supérieure du noyau 51. Ces moyens de détection sont adaptés à détecter une position prédéterminée du noyau 51, et par conséquent du bouchon 54 à l'intérieur du solénoïde 52. Dès que le noyau 51 atteint cette position prédéterminée, un signal de déclenchement ou de commande est envoyé au solénoïde 52 qui est alimenté en courant, ce qui a pour effet de déplacer le noyau 51 à l'intérieur du solénoïde 52 vers le haut à l'encontre de la force exercée par le ressort de rappel 53.

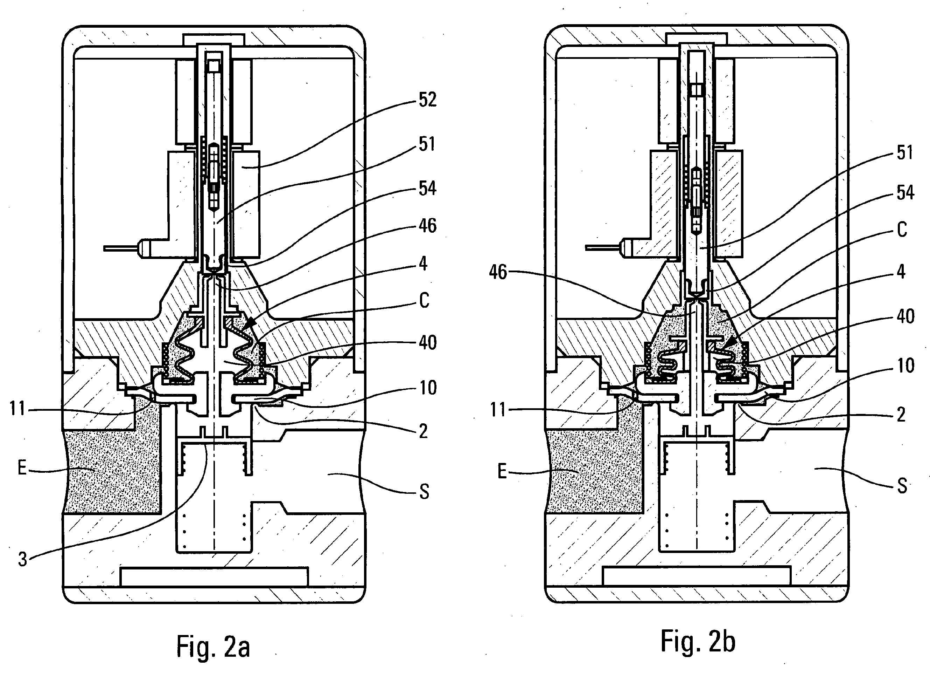

Il faut remarquer que la conception générale de cette vanne de commande selon l'invention est celle d'une électrovanne classique utilisant un clapet mobile, une chambre placée derrière le clapet mobile et un bipasse pour commander l'actionnement du clapet. C'est ce que nous allons voir ci-après en se référant aux figures 2A à 2F. La vanne de l'invention se distingue toutefois d'une vanne classique, en ce qu'elle intègre des moyens de détection de fuite qui sont mis en oeuvre par l'organe déplaçable ou déformable 4 associé aux moyens d'actionnement, à savoir la chambre C et le bipasse 5. Il est impossible de dissocier les éléments constitutifs de la vanne de ceux utiles pour réaliser les moyens de détection. C'est pourquoi on peut dire que les moyens de détection sont intégrés à la vanne.

La figure 2A représente la vanne de la figure 1 à l'état de repos avant ouverture, avec le produit fluide au niveau de l'entrée E et de la chambre C, et pas de produit au niveau de l'espace 40 et de la sortie S. Le produit fluide à l'entrée E et dans la chambre C n'est pas encore sous pression. Ainsi, il n'y a pas de différentiel de pression entre l'entrée E et la sortie S, et l'organe déformable 4 n'est pas sous contrainte. Il peut donc rester à l'état de repos. L'orifice de passage 46 est obturé par le bouchon 54 qui est poussé sur l'orifice par le ressort de rappel du noyau 51. Le clapet est fermé, reposant sur son siège 2 de manière étanche.

On se référera maintenant à la figure 2B. En mettant le produit fluide sous pression au niveau de l'entrée E, cette pression gagne également la chambre C à travers l'orifice 11. De l'autre côté, la sortie S reste à la pression atmosphérique. Par conséquent, il s'est créé un différentiel de pression important dans la chambre C, qui a pour effet de déformer l'organe 4 qui se comprime sur lui même. L'espace 40 est alors à un volume minimum. L'embout de l'organe 4 vient même en butée sur le clapet mobile. L'orifice de passage 46 est encore obturé par le bouchon 54 qui est sollicité par le noyau 51. La vanne est encore toujours fermée.

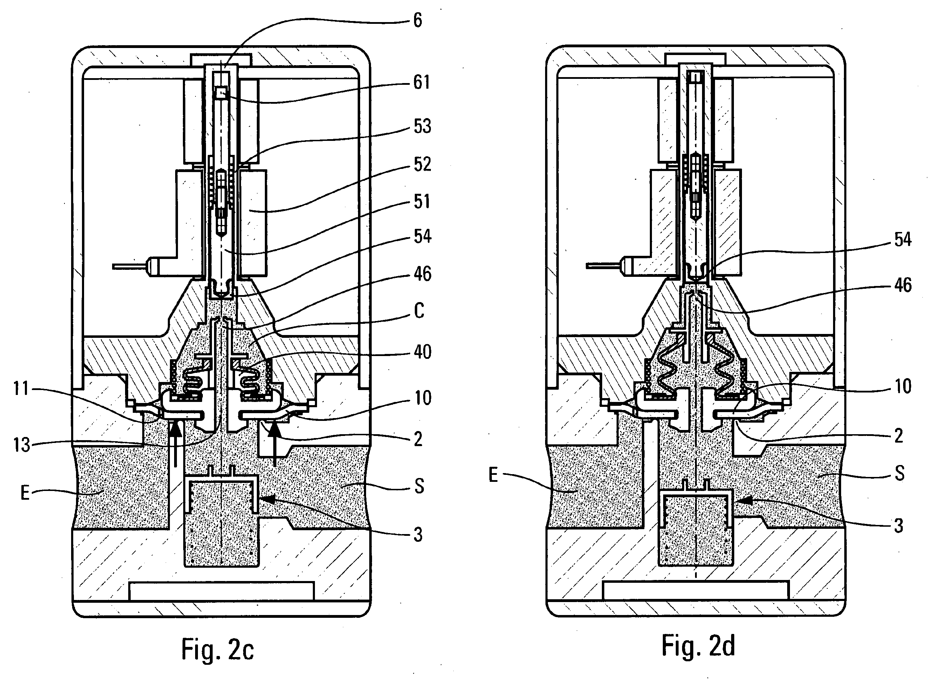

On se réfère maintenant à la figure 2C. En alimentant le solénoïde 52, le noyau 51 est déplacé vers le haut à l'encontre de la force exercée par le ressort de rappel 53. Ceci entraîne le bouchon 54 à se décoller de l'orifice de passage 46, de sorte qu'une communication de fluide est établie entre la chambre C et l'espace 40. Le produit fluide peut alors circuler à travers l'orifice de passage 46, l'espace 40 et le passage traversant 13. Cependant, étant donné que la section de passage de l'orifice 46 et du passage 13 est largement supérieure à celle du trou 11, il s'ensuit que la pression chute brutalement à l'intérieur de la chambre C et de l'espace 40, ce qui a pour effet de soulever le clapet mobile en éloignement du siège 2.

Ceci est représenté sur la figure 2D, sur laquelle on peut clairement voir que la rondelle 10 décollée du siège 2 et que l'orifice de passage 46 n'est pas obstrué par le bouchon 54. Le fluide peut alors s'écouler de l'entrée E. vers la sortie S à travers le clapet ouvert. Ceci correspond à la position normale ouverte de la vanne. On peut remarquer que le flotteur 3 s'est déplacé vers le bas sous l'effet de l'écoulement de fluide en provenance de l'entrée E. Le flotteur 3 est plus bas sur la figure 2D que sur la figure 2C : ceci s'explique par le fait que le débit est plus important lorsque la vanne est ouverte.

Les figures 2A à 2D sont illustratives d'un cycle opératoire de fonctionnement normal de la vanne de commande selon l'invention, et de n'importe quelle vanne ou électrovanne classique utilisant une chambre placée derrière le clapet mobile et un bipasse pour actionner le clapet.

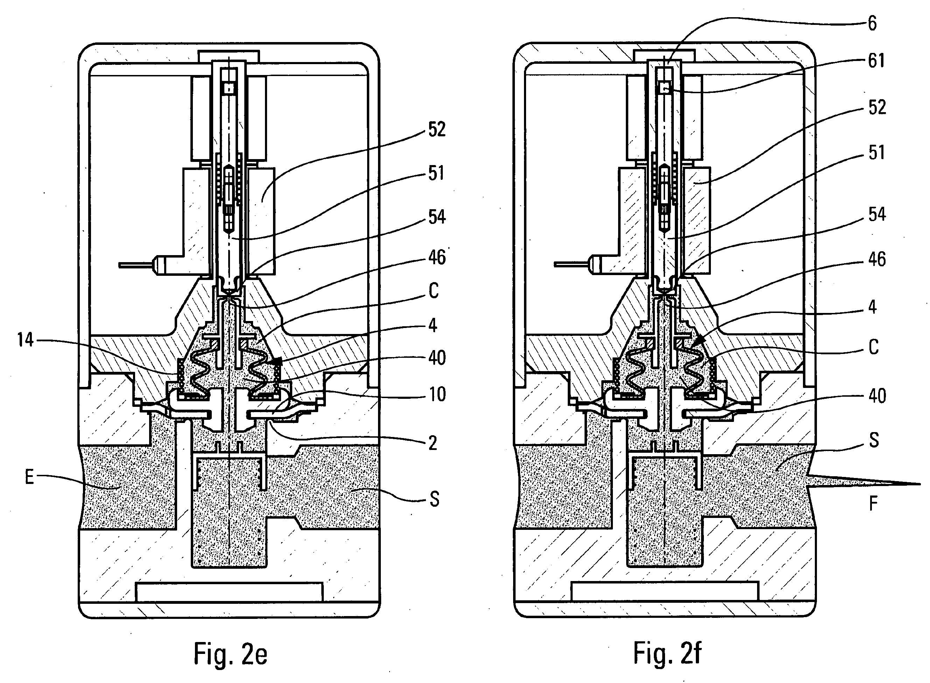

On se référera maintenant aux figures 2E et 2F pour expliquer le mode de fonctionnement de la vanne en mode de détection de fuites. A partir de la figure 2D, l'obturation de la vanne s'effectue en mettant le solénoïde 52 hors tension. Ceci a pour effet de libérer le noyau 51 dont le bouchon 54 va se repositionner sur l'orifice 46 pour le boucher. A partir de cet instant, la pression dans la chambre C est à nouveau égale à la pression au niveau de l'entrée E, et la pression dans l'espace 40 est égale à la pression au niveau de la sortie S. De ce fait, le ressort de rappel 14 sollicite le clapet mobile dans sa position de repos dans laquelle la rondelle 10 vient en contact étanche sur le siège 2. Ceci correspond à la figure 2E. En l'absence de toute fuite au niveau de la sortie S, la vanne va rester dans cet état fermé.

En revanche, si une fuite est détectée au niveau de la sortie S (matérialisée par F sur la figure 2F), un différentiel de pression va se créer et l'organe déformable 4 va directement être soumis à ce différentiel de pression, comme nous l'avons vu précédemment. En résultat, l'organe déformable 4 va se ratatiner comme sur la figure 2B, étant donné que la pression dans la chambre C est supérieure à la pression dans l'espace 40. L'organe déformable 4 va ainsi se déformer jusqu'à un certain état prédéterminé. Cet état prédéterminé peut aisément être mesuré en fonction de la distance dont s'est déplacé l'orifice de passage 46. Etant donné que le solénoïde 51 suit le déplacement de l'orifice 46, l'état de déformation prédéterminé de la membrane de l'organe déformable 4 peut être mesuré par le déplacement du solénoïde 51. C'est à ce niveau que l'on utilise les moyens de détection 6 qui vont mesurer une position prédéterminée du noyau 51 en détectant une distance par rapport à l'aimant 61 monté sur le noyau 51. Ainsi, dès que l'aimant 61 s'est éloigné d'une distance prédéterminée des moyens de détection 6, un signal de commande est envoyé au solénoïde 52 qui est alors alimenté, ce qui a pour effet de décoller le bouchon 54 de l'orifice 46, comme c'est le cas sur la figure 2C. Cependant, le différentiel de pression créé par la fuite F est tellement faible qu'il ne permet pas au clapet de se décoller de son siège. La vanne reste donc fermée, et la compensation de pression est uniquement effectuée au moyen du bipasse, c'est-à-dire en ouvrant l'orifice 46. Dès que le différentiel de pression est annulé, c'est-à-dire que les pressions au niveau de l'entrée et de la sortie sont équilibrées, l'alimentation du solénoïde 52 est arrêtée, et le bouchon 54 revient en contact étanche sur l'orifice 46. On revient alors à la position représentée sur la figure 2F. Le solénoïde aura été alimenté pendant une durée de l'ordre de quelques millisecondes. Si la fuite F persiste, l'organe déformable 4 va à nouveau être déformé, entraînant avec lui le noyau 51 et l'aimant 61. Dès que l'aimant 61 a atteint la position prédéterminée de détection, un nouveau signal de commande est envoyé au solénoïde 52, qui va alors décoller le bouchon 54 de l'orifice 46. L'équilibrage de pression est à nouveau effectué, de sorte que le différentiel de pression est annulé. L'alimentation du solénoïde 52 va ainsi être répété cycliquement, tant que la fuite F persiste. Ainsi, on peut détecter une fuite F au niveau de la sortie S en décelant une activation répétée et cyclique du bipasse de la vanne.

On peut même prévoir que le bipasse n'est plus alimenté après un certain nombre d'activations, par exemple dix ou vingt, afin de ne pas remettre à chaque fois de la pression dans la sortie S. On minimise ainsi l'étendue de la fuite F.

Il est également envisageable d'alimenter le solénoïde pendant un temps supérieur à quelques millisecondes, par exemple quelques secondes. On peut de toute façon mesurer le temps séparant la fin d'alimentation du solénoïde du début de la prochaine alimentation. Cela donne une indication de la fréquence de fonctionnement du solénoïde, qui peut être couplée à la variation de volume de l'organe déplaçable, pour fournir une valeur de débit de fuite.

Il faut remarquer que dans cette vanne selon le premier mode de réalisation de l'invention, les moyens d'actionnement classiques de la vanne sont utilisés également par les moyens de détection de fuite pour équilibrer la pression après un différentiel de pression faible. Plus précisément, le bipasse de la vanne classique fait partie intégrante des moyens de détection constitués par l'organe déformable 4 positionné dans la chambre C. On peut même dire que le bipasse est à la fois formé par l'embout de l'organe déformable 4 et les moyens d'actionnement de la vanne. Il s'ensuit que les moyens de détection sont intimement intégrés dans la vanne, de manière à ne pas pouvoir en être dissociés. C'est précisément dans cet aspect que réside un principe intéressant de l'invention.

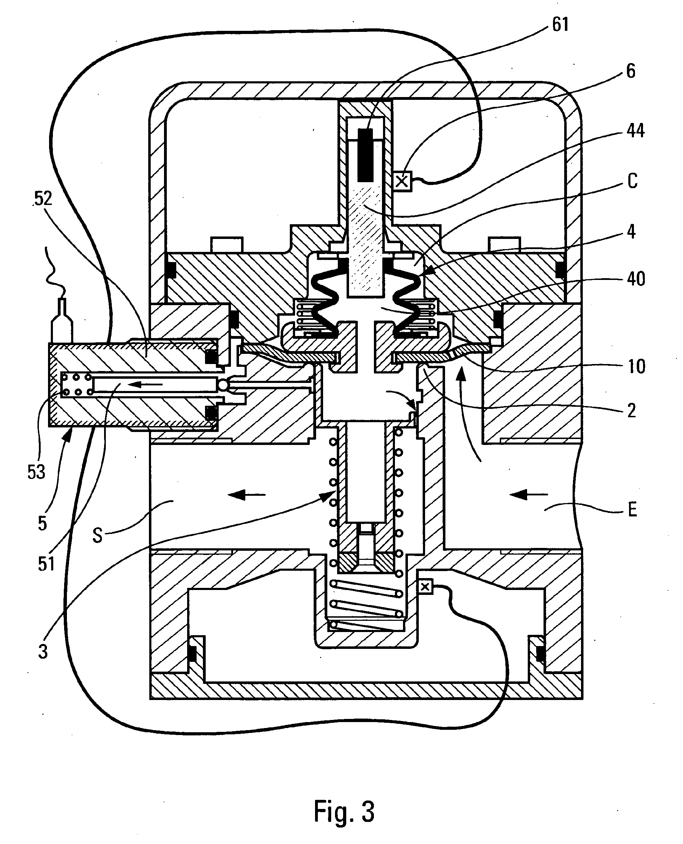

On se référera maintenant à la figure 3, qui représente un second mode de réalisation, dans lequel le bipasse n'est pas monté sur l'organe déformable 4. En effet, dans ce mode de réalisation, l'embout 44 de l'organe déformable 4 est directement pourvu des moyens de détection de position, par exemple sous la forme d'un aimant 61 détecté par une unité de détection 6. L'information relative au positionnement de l'embout 44 est envoyée au bipasse, qui est ici également formé par un noyau 51 coulissant à l'intérieur d'un solénoïde 52 contre l'action d'un ressort 53. Ainsi, en cas de détection de fuite au niveau de la sortie S, l'organe déformable 4 va se ratatiner sur lui même, ce qui a pour effet de faire descendre l'embout et son aimant associé 61. Dès que la position prédéterminée de l'embout 44 est détectée par les moyens de détection 6, l'information est acheminée au bipasse 5 qui va alimenter le solénoïde 52, de manière à déplacer le noyau 51 et ainsi établir une communication entre l'entrée et la sortie. Le mode de réalisation de la figure 3 a pour but de faire comprendre que le bipasse ou moyen de commande 5 du clapet n'est pas forcément couplé ou monté directement sur l'organe déformable 4 des moyens de détection. Toutefois, le bipasse 5 de ce mode de réalisation fait également partie intégrante des moyens de détection, puisqu'il permet, de part son actionnement répétitif cyclique, de déterminer la présence d'une fuite.

On comprend bien que les moyens de détection de fuite ne sont efficaces que pour des valeurs de différentiels de pression relativement faibles, voire très petites. On peut ainsi détecter une fuite, ou même des microfuites, alors que le débit de passage normal de la vanne est très élevé. La plage de détection de fuite est déterminé d'une part par la sensibilité de l'organe de détection 4 et par la raideur du clapet mobile 1, et plus particulièrement de sa rondelle élastiquement déformable 10. En effet, lorsque le différentiel de pression est trop important, comme c'est le cas sur les figures 2B et 2C, le clapet va s'ouvrir, et il n'est pas besoin de détecter une telle contrainte. Dans ce cas, il est préférable que les moyens de détection de position prédéterminée de l'embout 44 n'envoient pas de signal de commande au bipasse, qui est de toute façon alimenté en permanence pour maintenir la vanne ouverte. On peut par exemple empêcher l'envoi de ce signal en détectant une valeur prédéterminée de débit au moyen des moyens du flotteur 3, qui fait office de moyen de contrôle de débit. On peut par exemple monter un capteur au niveau du flotteur 3, dont le signal est envoyé au bipasse 5 pour lui indiquer qu'il n'est pas nécessaire qu'il obéisse aux signaux envoyés par les moyens de détection de fuite. Ainsi, la vanne fonctionne en tant que vanne classique pour des valeurs de différentiel de pression ou de débit supérieur à un certain seuil, et fonctionne en tant que détecteur de fuite pour des valeurs de différentiel de pression et de débit faible situé en dessous d'un certain seuil. On obtient ainsi une vanne multifonctions dont certains organes sont partagés à la fois pour réaliser la fonction classique d'ouverture / fermeture de vanne et la fonction additionnel de détection de fuite.

Un clapet de vanne conventionnel est adapté à s'ouvrir à partir d'un différentiel de pression de 200 millibars. Par conséquent, l'organe de détection 4 peut être choisi pour être sensible de 0 à 200 millibars maximum.

Dans toute la description, on s'est servi du différentiel de pression. On peut également utiliser le paramètre de différentiel de volume, par exemple dans le cas d'un organe déplaçable, comme la membrane déformable. Le signal d'alimentation du solénoïde peut être envoyé lorsque le volume de la membrane a diminué d'une valeur prédéterminée, par exemple quelques mm³. Cela permet de mesurer le débit de fuite à partir de la fréquence de déclenchement du solénoïde.

## Revendications

1. Vanne de commande d'écoulement de fluide comprenant :
- une entrée (E) destinée à être connectée à une conduite d'alimentation,
- une sortie (S) destinée à être connectée à une conduite d'évacuation,
- un clapet mobile (1) reposant, au repos, sur un siège de clapet (2) de manière à isoler l'entrée (E) de la sortie (S),
- des moyens d'actionnement (5, C) pour déplacer le clapet mobile (1), ces moyens comprenant :
- une chambre (C) communiquant avec l'entrée (E) à travers un trou (11) de section déterminée, la chambre (C) étant disposée par rapport au clapet (1) du côté opposé au siège (2), de manière à solliciter le clapet sur son siège, et
- un bipasse (5) reliant la chambre (C) à la sortie (S), le bipasse étant commandable entre un état ouvert de passage de fluide et un état fermé, le bipasse présente une section de passage supérieure à celle du trou (11) de manière à faire chuter la pression dans la chambre en ouvrant le bipasse,
**caractérisé en ce qu'**elle comporte des moyens de détection de fuites de fluide (4, 5, 6) intégrés dans la vanne et aptes à détecter une fuite en aval du clapet mobile.

2. Vanne de commande selon la revendication 1, dans laquelle les moyens de détection sont couplés aux moyens d'actionnement du clapet mobile (5, C), de sorte que les moyens d'actionnement font partie intégrante des moyens de détection lorsque la vanne est en mode de détection de fuite.

3. Vanne de commande selon la revendication 1 ou 2, dans laquelle les moyens de détection de fuite comprennent un organe de détection (4) sensible au différentiel de pression entre l'entrée et la sortie, ledit organe étant soumis à la pression régnant dans la chambre (C) et à la pression régnant au niveau de la sortie (S).

4. Vanne de commande selon la revendication 1, 2 ou 3, dans laquelle l'organe (4) comprend une couronne d'ancrage (41) solidaire du clapet mobile (1), une membrane élastiquement déformable (42) et un embout d'extrémité (44) opposé à la couronne, ledit embout étant déplaçable axialement par rapport à la couronne par déformation de la membrane, l'embout étant pourvu de moyens de détection (6) aptes à relever une position prédéterminée de l'embout (44) et à envoyer un signal de déclenchement au bipasse (5) pour l'amener dans son état ouvert.

5. Vanne de commande selon la revendication 4, dans laquelle le bipasse (5) est monté sur l'embout (44).

6. Vanne de commande selon la revendication 5, dans laquelle l'embout (44) définit un orifice de passage (46) faisant communiquer la chambre (C) avec la sortie (S), le bipasse (5) comprenant un noyau ferromagnétique (51) déplaçable en coulissement dans un solénoïde (52), le noyau (51) étant apte à obturer l'orifice de passage (46) de l'embout (44) lorsque le solénoïde (52) n'est pas alimenté, le noyau (51) étant pourvu de moyens de détection (6) aptes à relever une position prédéterminée du noyau et à envoyer un signal d'alimentation au solénoïde, pour déplacer le noyau en éloignement de l'embout et ainsi dégager l'orifice de passage.

7. Vanne de commande selon l'une quelconque des revendications 3 à 6, dans laquelle le clapet mobile (1) forme un passage traversant (13) qui fait communiquer la sortie (S) avec l'intérieur de l'organe (4) disposé dans la chambre (C).

8. Vanne de commande selon l'une quelconque des revendications précédentes, dans laquelle le clapet mobile (1) comprend une rondelle élastiquement déformable (10) maintenue fixement sur sa périphérie externe, une face de la rondelle étant tournée vers l'entrée (E) et la sortie (S) et reposant sur le siège (2), alors que l'autre face est tournée vers la chambre (C), le trou (11) traversant la rondelle d'une face à l'autre.

9. Vanne de commande selon la revendication 8, dans laquelle le clapet mobile (1) comprend en outre une douille rigide (12) formant un passage traversant (13) qui fait communiquer la sortie (S) avec l'intérieur de l'organe (4), cet organe étant solidaire de la douille (12), la douille étant sollicitée par un ressort (14) de manière à pousser la rondelle sur son siège (2).

10. Vanne de commande selon l'une quelconque des revendications précédentes, comprenant en outre des moyens de contrôle de débit (3) au niveau de la sortie (S), les moyens de contrôle de débit envoyant un signal de coupure des moyens de détection de fuite, lorsque le débit atteint une valeur prédéterminée.

## Claims

1. A fluid-flow control valve comprising:
• an inlet (E) for connecting to a feed duct;
• an outlet (S) for connecting to an evacuation duct;
• a valve member (1) that, at rest, bears against a valve seat (2) in such a manner as to isolate the inlet (E) from the outlet (S); and
• actuator means (5, C) for moving the valve member (1), the actuator means comprising:
• a chamber (C) that communicates with the inlet (E) via a hole (11) of determined section, the chamber (C) being disposed relative to the valve member (1) on its side facing away from the seat (2), in such a manner as to urge the valve member against its seat; and
• a bypass (5) that connects the chamber (C) to the outlet (S), the bypass being controllable between an open state for passing fluid, and a closed state, the bypass presents a through section that is greater than the through section of the hole (11), so as to cause the pressure in the chamber to drop on opening the bypass;
the control valve being **characterized in that** it comprises fluid-leak detector means (4, 5, 6) that are integrated in the valve and suitable for detecting a leak downstream from the valve member.

2. A control valve according to claim 1, in which the detector means are coupled to the actuator means of the valve member (5, C), such that the actuator means form an integral part of the detector means when the valve is in leak-detection mode.

3. A control valve according to claim 1 or claim 2, in which the leak detector means comprise a detector member (4) that is sensitive to the pressure difference between the inlet and the outlet, said detector member being subjected to the pressure existing in the chamber (C), and to the pressure existing in the outlet (S).

4. A control valve according to claim 1, 2, or 3, in which the detector member (4) comprises an anchor ring (41) that is secured to the valve member (1), an elastically-deformable membrane (42), and an endpiece (44) that is remote from the ring, said endpiece being axially movable relative to the ring by deforming the membrane, the endpiece being provided with detector means (6) that are suitable for detecting a predetermined position of the endpiece (44) and for sending a trigger signal to the bypass (5) so as to bring it into its open state.

5. A control valve according to claim 4, in which the bypass (5) is mounted on the endpiece (44).

6. A control valve according to claim 5, in which the endpiece (44) defines a through orifice (46) that puts the chamber (C) into communication with the outlet (S), the bypass (5) including a ferromagnetic core (51) that is slidably movable in a solenoid (52), the core (51) being suitable for closing the through orifice (46) of the endpiece (44) while the solenoid (52) is not powered, the core (51) being provided with detector means (6) that are suitable for detecting a predetermined position of the core and for sending a signal for powering the solenoid so as to move the core away from the endpiece and thus release the through orifice.

7. A control valve according to any one of claims 3 to 6, in which the valve member (1) forms a through passage (13) that puts the outlet (S) into communication with the inside of the detector member (4) disposed in the chamber (C).

8. A control valve according to any preceding claim, in which the valve member (1) includes an elastically-deformable washer (10) that is held in stationary manner around its outer periphery, one face of the washer facing both the inlet (E) and the outlet (S), and bearing against the seat (2), while its other face faces the chamber (C), the hole (11) passing through the washer from one face to the other.

9. A control valve according to claim 8, in which the valve member (1) further includes a rigid bushing (12) forming a through passage (13) that puts the outlet (S) into communication with the inside of the detector member (4), the detector member being secured to the bushing (12), the bushing being urged by a spring (14) in such a manner as to push the washer against its seat (2).

10. A control valve according to any preceding claim, further including flow-rate control means (3) in the outlet (S), the flow-rate control means sending a cut-off signal from the leak detector means when the flow rate reaches a predetermined value.

## Patentansprüche

1. Fluidströmungs-Steuerventil, aufweisend:
- einen Einlass (E) zum Verbinden mit einer Zuleitung,
- einen Auslass (S) zum Verbinden mit einer Ableitung,
- eine bewegliche Klappe (1), die in der Ruhestellung auf einem Klappensitz (2) aufliegt, so dass sie den Einlass (E) von dem Auslass (S) isoliert,
- Betätigungsmittel (5, C) zum Verschieben der beweglichen Klappe (1), wobei diese Mittel umfassen:
eine Kammer (C), die über ein Loch (11) mit einem bestimmten Querschnitt mit dem Einlass (E) in Verbindung steht, wobei die Kammer (C) in Bezug auf die Klappe (1) auf der dem Sitz (2) entgegengesetzten Seite so angeordnet ist, dass die Klappe auf ihren Sitz gedrückt wird, und
eine Umgehungsleitung (5), die die Kammer (C) mit dem Auslass (S) verbindet, wobei die Umgehungsleitung zwischen einem geöffneten Zustand, in dem Fluid hindurch gelassen wird, und einem geschlossenen Zustand regelbar ist, und die Umgehungsleitung einen Durchgangsabschnitt aufweist, der größer ist als derjenige des Loches (11), so dass der Druck in der Kammer beim Öffnen der Umgehungsleitung abfällt, **dadurch gekennzeichnet, dass** es Mittel zum Erkennen einer Fluidleckage (4, 5, 6) aufweist, die in dem Ventil integriert und dazu geeignet sind, eine Leckage stromabwärts der beweglichen Klappe zu erkennen.

2. Steuerventil nach Anspruch 1, wobei die Erkennungsmittel so mit den Betätigungsmitteln der beweglichen Klappe (5, C) gekoppelt sind, dass die Betätigungsmittel Grundbestandteil der Erkennungsmittel sind, wenn sich das Ventil im Leckage-Erkennungsmodus befindet.

3. Steuerventil nach Anspruch 1 oder 2, wobei die Leckage-Erkennungsmittel ein Erkennungselement (4) umfassen, das für das Druckgefälle zwischen Einlass und Auslass empfindlich ist, wobei das Element dem in der Kammer (C) vorherrschenden Druck und dem am Auslass (S) vorherrschenden Druck ausgesetzt ist.

4. Steuerventil nach Anspruch 1, 2 oder 3, wobei das Element (4) einen Verankerungskranz (41), der mit der beweglichen Klappe (1) einstückig ausgebildet ist, eine elastisch verformbare Membran (42) und einen Endansatz (44) gegenüber dem Kranz umfasst, wobei der Ansatz axial in Bezug auf den Kranz durch Verformung der Membran verschiebbar ist, wobei der Ansatz mit Erkennungsmitteln (6) versehen ist, die eine vorbestimmte Position des Ansatzes (44) aufzeichnen und ein Auslösesignal an die Umgehungsleitung (5) senden können, um sie in ihren geöffneten Zustand zu überführen.

5. Steuerventil nach Anspruch 4, wobei die Umgehungsleitung (5) auf dem Ansatz (44) angebracht ist.

6. Steuerventil nach Anspruch 5, wobei der Ansatz (44) eine Durchgangsöffnung (46) abgrenzt, die die Kammer (C) mit dem Auslass (S) verbindet, wobei die Umgehungsleitung (5) einen ferromagnetischen Kern (51) umfasst, der gleitend in einem Solenoid (52) verschiebbar ist, wobei der Kern (51) die Durchgangsöffnung (46) des Ansatzes (44) verschließen kann, wenn das Solenoid (52) nicht gespeist wird, wobei der Kern (51) mit Erkennungsmitteln (6) versehen ist, die eine vorbestimmte Position des Kerns aufzeichnen und ein Zufuhrsignal an das Solenoid senden können, um den Kern weg von dem Ansatz zu verschieben und somit die Durchgangsöffnung freizugeben.

7. Steuerventil nach einem der Ansprüche 3 bis 6, wobei die bewegliche Klappe (1) einen Durchgang (13) bildet, der den Auslass (S) mit dem Inneren des in der Kammer (C) angeordneten Elements (4) verbindet.

8. Steuerventil nach einem der vorhergehenden Ansprüche, wobei die bewegliche Klappe (1) eine elastisch verformbare Scheibe (10) umfasst, die fest auf ihrem äußeren Umfang gehalten wird, wobei eine Seite der Scheibe zum Auslass (S) und zum Einlass (E) weist und auf dem Sitz (2) ruht, während die andere Seite zur Kammer (C) weist, wobei das Loch (11) von einer Seite zur anderen Seite der Scheibe hindurchgeht.

9. Steuerventil nach Anspruch 8, wobei die bewegliche Klappe (1) des Weiteren eine starre Buchse (12) umfasst, die einen Durchgang (13) bildet, der den Auslass (S) mit dem Inneren des Elements (4) verbindet, wobei dieses Element mit der Buchse (12) einstückig ausgebildet ist, wobei die Buchse durch eine Feder (14) so belastet ist, dass die Scheibe auf ihren Sitz (2) gedrückt wird.

10. Steuerventil nach einem der vorhergehenden Ansprüche, des Weiteren umfassend Mengenregelungsmittel (3) am Auslass (S), wobei die Mengenregelungsmittel ein Trennsignal der Leckage-Erkennungsmittel senden, wenn die Menge einen vorbestimmten Wert erreicht.
